# EUROPÄISCHE PATENTSCHRIFT

(11) **EP 0 410 959 B1**
(45) Veröffentlichungstag und Bekanntmachung des Hinweises auf die Patenterteilung: **18.11.1993**
(21) Anmeldenummer: 90890227.3
(22) Anmeldetag: 26.07.1990
(51) Int. Cl.: C02F 3/20, C02F 3/22, B01F 3/04

(54) **Vorrichtung zur Aufbereitung von in Becken befindlichen Gewässern**
Device for treating waters in tanks
Dispositif pour le traitement des eaux contenues dans un bassin

(30) Priorität: 26.07.1989 AT 1810/89
(43) Veröffentlichungstag der Anmeldung: 30.01.1991
(73) Patentinhaber: MEHAG HANDELSGESELLSCHAFT M.B.H., A-2380 Perchtoldsdorf (AT)
(72) Erfinder: Decasper, Melchior, CH-7000 Chur (CH)
(74) Vertreter: Brauneiss, Leo, Dipl.Ing.

(56) Entgegenhaltungen:
- WO-A-88/08827
- CH-A- 494 319
- FR-A- 1 092 827
- GB-A- 2 047 343
- US-A- 3 628 775

## Beschreibung

Die Erfindung betrifft eine Vorrichtung zur Aufbereitung von in Becken befindlichen Gewässern, insbesondere von Abwässern, Deponiesäften, Fischgewässern, mit wenigstens einem im Becken versenkt angeordneten, vorzugsweise zylindrisch mit im wesentlichen lotrechter Achse ausgebildeten, Behälter, dessen oberes Ende wenigstens eine Überströmöffnung aufweist und in dem eine Belüftungseinrichtung angeordnet ist. Unter dem Begriff "Becken" werden sowohl künstliche als auch natürliche Becken verschiedenster Form verstanden, also beispielsweise auch Fischteiche, wobei die künstlichen Becken oben offen oder geschlossen sein können.

Es ist häufig erforderlich,die in solchen Becken befindlichen Gewässer zu belüften (CH-A-494319). So ist eine Belüftung eines Vorklärbeckens für Abwässer oder eine Belüftung von Deponiesäfte enthaltenden Becken notwendig, damit dort eine aerobe Vorbehandlung des Beckeninhaltes erfolgt. Zu diesem Zweck ist es auch erforderlich, den Beckeninhalt umzuwälzen. Bei Fischteichen ist eine Belüftung notwendig, um den notwendigen Sauerstoff für die Fische sicherzustellen. Auch in diesem Fall ist eine Umwälzung des Wassers zweckmäßig, um eine gleichmäßige Belüftung des gesamten Wasserinhaltes zu gewährleisten und um bei in Fließgewässern lebenden Fischen eine Bewegung des Wassers zu simulieren.

Es ist bereits bekannt, im Becken versenkt angeordnete Belüftungseinrichtungen an auf der Wasseroberfläche angeordneten Schwimmern oder an einer das Becken oder zumindest einen Teil desselben überspannenden Brücke aufzuhängen und so zu bewegen, daß nacheinander verschiedene Bereiche des Beckens belüftet werden. Nachteilig ist bei dieser Anordnung, daß nicht nur eine aufwendige Konstruktion für die Abstützung der Belüftungseinrichtungen, sondern auch Einrichtungen zum Bewegen der Belüftungseinrichtungen innerhalb des Beckens vorgesehen sein müssen. Ein wesentlicher Nachteil besteht weiters darin, daß immer nur eine partielle Belüftung des Beckeninhaltes an jenen Stellen erfolgt, die den Belüftungseinrichtungen unmittelbar benachbart sind.

Es ist auch bekannt, in einem Becken ein vom Beckeninhalt durchströmtes Rohr vorzusehen, dem an einer Stelle über eine Düse Wasser unter Druck zugeführt wird, wobei im Bereich der Düse eine Luftzuführungsleitung mündet, so daß durch die Druckwasserzufuhr Luft mitgerissen wird, die sich mit Wasser vermengt. Bei einer anderen ähnlichen bekannten Ausführungsform ist gleichfalls in einem Becken ein am oberen und unteren Ende offenes Rohr mit im wesentlichen lotrechter Achse versenkt angeordnet, dem über eine seitlich in die Rohrwand mündende Leitung aus einem Tank ein unter Druck stehendes Gas zugeführt wird (EP-A-0 033 407). Dadurch steigt die im Becken befindliche Flüssigkeit innerhalb des Rohres nach oben und sinkt im Kreislauf unmittelbar außerhalb des Rohres wieder nach unten. Bei allen diesen bekannten Anordnungen findet somit eine Bewegung des Beckeninhaltes und bei Luftzufuhr eine Belüftung desselben nur innerhalb des Rohres und in der unmittelbaren Nachbarschaft desselben statt.

Es ist Aufgabe der vorliegenden Erfindung, eine Vorrichtung zur Aufbereitung von in Becken befindlichen Gewässern zu schaffen, welche die erwähnten Nachteile vermeidet, einfach und wartungsgünstig arbeitet und eine weiträumige Belüftung des Beckeninhaltes sicherstellt. Zur Lösung dieser Aufgabe schlägt die Erfindung vor, daß der Schacht von einem am unteren Ende geschlossenen vorzugsweise zylindrisch mit im wesentlichen lotrechter Achse ausgebildeten, Behälter gebildet ist, in dem unterhalb der Belüftungseinrichtung mindestens eine den Zuströmquerschnitt bildende Ansaugleitung mündet, deren Ansaugöffnung in Abstand von der Behälterwand und in Abstand vom Boden des Beckens unterhalb des Flüssigkeitsspiegels desselben angeordnet ist. Über diese Ansaugleitung kann die im Becken befindliche Flüssigkeit in den unten geschlossenen Behälter eindringen und wird dort über die Belüftungseinrichtung mit Luft vermengt, somit belüftet. Durch die Vermengung mit Luft wird die Flüssigkeit leichter, steigt daher innerhalb des Behälters nach oben und tritt aus der Überströmöffnung aus dem Behälter aus. Dadurch entsteht im Behälter eine von unten nach oben gerichtete Strömung, welche bewirkt, daß über die Ansaugleitung Flüssigkeit aus dem Becken in den Behälter nachströmt. Die im Becken befindliche Flüssigkeit strömt somit in einem weiträumigen Kreislauf, und zwar im Behälter nach oben, wo sie durch die Überströmöffnung austritt; und anschließend im Becken nach unten, wo sie über die Ansaugöffnung in die Ansaugleitung und von dieser in den Behälter eintritt. Da nun die Ansaugöffnung in Abstand von der Behälterwand angeordnet ist, wird durch diese Strömung nicht nur eine Vermischung und Belüftung in der unmittelbaren Umgebung des Behälters erzielt, sondern es wird vielmehr eine weiträumige intensive Belüftung und Vermischung des Beckeninhaltes zumindest in jenem Bereich zwischen der Überströmöffnung des Behälters und der Ansaugöffnung der Ansaugleitung gewährleistet. Die erfindungsgemäße Vorrichtung ermöglicht also mit einer im Verhältnis zur Beckengröße geringen Anzahl von Belüftungseinrichtungen eine intensive Belüftung und Durchmischung des Beckeninhaltes mit großer Homogenität, ohne daß es erforderlich ist, die Belüftungseinrichtungen innerhalb des Beckens zu bewegen. Bei Anwendung der erfindungsgemäßen Vorrichtung ergibt sich eine große Umwälzmenge der im Becken befindlichen Flüssigkeit pro Zeiteinheit bei kleinem Leistungserfordernis, so daß nicht nur an Energie gespart wird, sondern bei Verwendung bei Abwasseranlagen auch die Beckengröße kleiner gewählt werden kann, da infolge der intensiven Belüftung des Beckeninhaltes die chargenweise Abfuhr in kürzeren Zeitintervallen erfolgen kann.

Gemäß einer bevorzugten Ausführungsform der Erfindung ist die am oberen Ende des Behälters angeordnete Überströmöffnung unterhalb des Flüssigkeitsspiegels des Beckens vorgesehen, so daß die im Behälter hochsteigende Flüssigkeit zwar im Bereich des Flüssigkeitsspiegels des Beckens, jedoch unterhalb dieses Flüssigkeitsspiegels austritt, wodurch eine unerwünschte Schaumbildung im Bereich des Flüssigkeitsspiegels zumindest reduziert werden kann.

Zweckmäßig ist in Abstand oberhalb der vorzugsweise vom oben offenen Ende des Behälters gebildeten Überströmöffnung, jedoch unterhalb des Flüssigkeitsspiegels eine Abdeckplatte vorgesehen. Diese Abdeckplatte bewirkt beim Austreten der im Behälter etwa lotrecht aufsteigenden, mit Luft vermengten Flüssigkeit aus der Überströmöffnung eine Umlenkung in eine etwa horizontale Richtung, so daß sich diese Flüssigkeit zunächst in gewünschter Weise entlang des Flüssigkeitsspiegels bewegt, bevor sie im Becken wieder nach unten sinkt. Außerdem wird auch hierdurch eine unerwünschte Schaumbildung im Bereich des Flüssigkeitsspiegels vermieden. Schließlich weist die Anordnung dieser Abdeckplatte den Vorteil auf, daß die Strömungsgeschwindigkeit bei konstantem Abstand der Abdeckplatte von der Überströmöffnung auch bei unterschiedlichen Eintauchtiefen des Behälters im wesentlichen konstant bleibt.

Die Ansaugöffnung der Ansaugleitung ist vorzugsweise im Bereich des Bodens des Beckens vorgesehen, so daß auch die in diesem Bodenbereich befindliche Flüssigkeit intensiv belüftet und umgewälzt wird.

Die Belüftungseinrichtung kann gemäß einer bevorzugten Ausführungsform der Erfindung ein von einem Tauchmotor zu einer Rotationsbewegung angetriebenes, etwa horizontal unterhalb des Motors angeordnetes scheibenförmiges Laufrad aufweisen, dessen Oberseite eine ringförmige Öffnung eines Luftkanales abdeckt, der über eine Luftleitung mit der Atmosphäre in Verbindung steht, und dessen Unterseite mit etwa radial verlaufenden Rippen versehen ist und am Umfang durch einen Abdeckring abgedeckt ist, wobei zwischen dem Rand der ringförmigen Öffnung des Luftkanales und der Oberseite des Laufrades sowie zwischen dem Abdeckring und der Unterseite des Laufrades ein Spalt freigehalten ist. Bei dieser Ausbildung der Belüftungseinrichtung wird die im Behälter befindliche Flüssigkeit an der Unterseite des Laufrades zentrisch angesaugt und durch die Rippen nach außen geschleudert, wo sie durch den Spalt zwischen der Unterseite des Laufrades und dem Abdeckring austritt, wobei gleichzeitig Luft über die Luftleitung angesaugt und durch den Spalt zwischen der Oberseite des Laufrades und dem Rand der ringförmigen Öffnung des Luftkanales nach außen befördert wird. Am Ende der beiden benachbart angeordneten Spalte vermischt sich die Luft innig mit der Flüssigkeit, so daß eine hervorragende vollständige Durchlüftung dieser Flüssigkeit bewirkt wird. Dadurch, daß die belüftete Flüssigkeit radial nach außen gefördert wird, erfolgt eine gleichmäßige Durchlüftung des gesamten Behälterinhaltes.

Vorzugsweise ist der Außendurchmesser des Abdeckringes größer und der Innendurchmesser des Abdeckringes kleiner als der Durchmesser des Laufrades, wodurch sich eine gute Führung der Flüssigkeit im Bereich des Spaltes ergibt und die Belüftung verbessert wird.

Zweckmäßig verlaufen die Rippen an der Unterseite des Laufrades bogenförmig und es sind zumindest 8, vorzugsweise zwischen 8 und 20, Rippen vorgesehen.

Eine derartige Belüftungseinrichtung kann maximal 4 m unterhalb des Flüssigkeitsspiegels angeordnet werden, da sonst die Saugwirkung nicht ausreicht, um eine hinreichend große Luftmenge über die Luftleitung anzusaugen. Insbesondere bei tieferen Becken und daher auch entsprechend längeren Behältern ist es daher von Vorteil, wenn die Belüftungseinrichtung von einer mit einer Druckluftquelle in Verbindung stehenden Lufteinblasdüse gebildet ist.

Gemäß einer bevorzugten Ausführungsform der Erfindung ist der Behälter bzw. sind vorzugsweise mehrere Behälter am Rand des Beckens angeordnet, wobei die Ansaugleitungen für die im Becken befindliche Flüssigkeit etwa in Richtung zum Mittelpunkt des Beckens, also bei einem zylindrischen Becken etwa radial, verlaufen. Diese Ausbildung ergibt nicht nur eine vollständige und gleichmäßige Belüftung und Durchmischung des gesamten Beckeninhaltes, sondern ermöglicht auch eine einfache Wartung der Belüftungseinrichtungen, da diese vom Beckenrand aus zugänglich sind und keine Brückenkonstruktionen od.dgl. erforderlich sind, um zu den Belüftungseinrichtungen zu gelangen.

Insbesondere bei Verwendung der erfindungsgemäßen Vorrichtung für Rohwässer tritt häufig im Bereich des Flüssigkeitsspiegels des Beckens eine unerwünschte Schaumbildung auf. Um diesen Schaum zu beseitigen, kann im Bereich des Flüssigkeitsspiegels des Beckens eine Einrichtung zum Zerstören des sich an der Oberfläche der Flüssigkeit bildenden Schaumes vorgesehen sein. Gemäß einer bevorzugten Ausführungsform der Erfindung weist diese Einrichtung ein von einem Tauchmotor zu einer Rotationsbewegung angetriebenes, etwa horizontal im Bereich der Grenze zwischen der flüssigen und der schaumförmigen Phase der Flüssigkeit oberhalb des Motors angeordnetes scheibenförmiges Laufrad auf, dessen Oberfläche mit etwa radial verlaufenden Rippen versehen ist. Diese Einrichtung zur Zerstörung des sich auf der Oberfläche der Flüssigkeit bildenden Schaumes entspricht somit in konstruktiver Weise, abgesehen vom fehlenden Abdeckring und von der fehlenden Luftleitung der oben beschriebenen Belüftungseinrichtung, wird jedoch umgekehrt im Becken angeordnet, so daß sich bei dieser Einrichtung das Laufrand oberhalb des Tauchmotors befindet. Außerdem ist die Anzahl der Rippen am Laufrad bei dieser Einrichtung geringer als die Anzahl der Rippen am Laufrad der Belüftungseinrichtung und beträgt vorzugsweise weniger als die Hälfte der Anzahl dieser Rippen der Belüftungseinrichtung. Durch diese Einrichtung zur Zerstörung des Schaumes wird der Schaum zentrisch vom Laufrad angesaugt und radial nach außen gefördert, wobei er sich verflüssigt und nach unten gedrückt wird, wo er sich mit der Flüssigkeit vermengt. Dadurch erfolgt eine wirksame Beseitigung des Schaumes.

Zweckmäßig verlaufen auch hier die Rippen an der Oberseite des Laufrades bogenförmig.

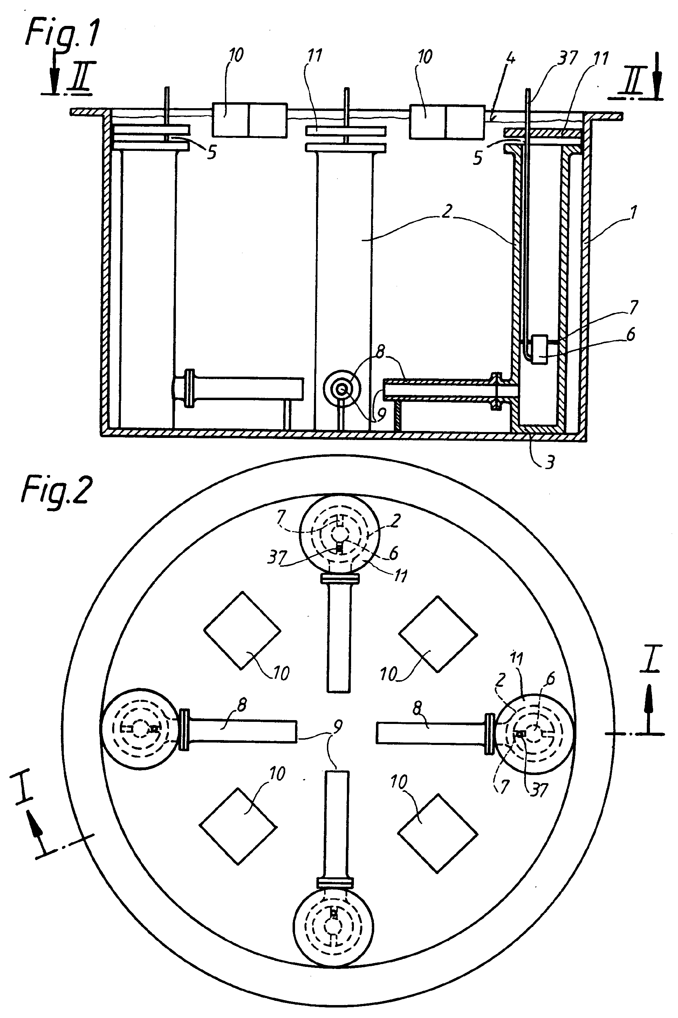

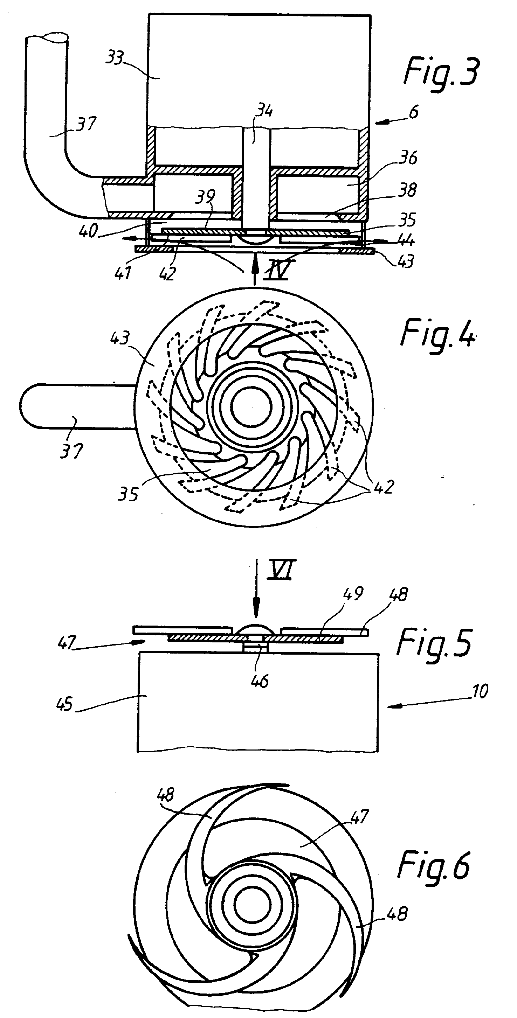

In der Zeichnung ist die Erfindung an Hand eines Ausführungsbeispieles schematisch veranschaulicht. Fig.1 zeigt einen Querschnitt durch eine in einem Becken angeordnete erfindungsgemäße Vorrichtung nach der Linie I-I in Fig.2 und Fig.2 stellt eine Draufsicht in Richtung der Pfeile II in Fig.1 dar. Fig. 3 zeigt in Seitenansicht, teilweise im Schnitt, eine Belüftungseinrichtung und Fig.4 stellt eine Ansicht in Richtung des Pfeiles IV in Fig.2 dar. Fig.5 zeigt in Seitenansicht, teilweise im Schnitt, eine Einrichtung zum Zerstören des sich auf der Oberfläche der im Becken befindlichen Flüssigkeit bildenden Schaumes und Fig.6 stellt eine Ansicht in Richtung des Pfeiles VI in Fig.5 dar.

In einem Becken 1, das in der Zeichnung als künstliches Becken dargestellt ist, jedoch auch ein natürliches Becken, beispielsweise ein Teich, sein kann, befindet sich zumindest ein zylindrischer Behälter 2 mit im wesentlichen lotrechter Achse. Beim dargestellten Ausführungsbeispiel sind vier solcher Behälter 2 dargestellt. Die Anzahl der Behälter kann je nach Beckengröße variieren. Jeder Behälter 2 ist an seinem unteren Ende durch einen Boden 3 abgeschlossen, der vorzugsweise am Boden des Beckens 1 aufruht, und weist an seinem oberen Ende wenigstens eine unterhalb des Flüssigkeitsspiegels 4 der im Becken 1 befindlichen Flüssigkeit angeordnete Überströmöffnung 5 auf, welche im einfachsten Fall vom oben offenen Ende des Behälters 2 gebildet ist. Es kann aber auch der Behälter 2 oberhalb des Flüssigkeitsspiegels 4 enden, was für die Durchführung von Revisionsarbeiten vorteilhaft ist, da dann der Innenraum des Behälters leichter zugänglich ist. In diesem Fall müssen aber in der Behälterwand unterhalb des Flüssigkeitsspiegels 4 Überströmöffnungen 5 angeordnet werden.

In einem Abstand oberhalb des die Überströmöffnung 5 bildenden offenen Endes des Behälters 2, jedoch unterhalb des Flüssigkeitsspiegels 4, ist eine Abdeckplatte 11 vorgesehen, durch welche eine Umlenkung der aus der Überströmöffnung 5 austretenden Flüssigkeit etwa parallel zum Flüssigkeitsspiegel 4 bewirkt wird und eine etwa konstante Strömungsgeschwindigkeit der Flüssigkeit bei unterschiedlichen Eintauchtiefen des Behälters 2 sichergestellt wird.

Im Inneren jedes Behälters 1 befindet sich eine Belüftungseinrichtung 6, die im folgenden näher erläutert wird. Die Belüftungseinrichtung 6 ist über Streben 7 od dgl. an der Behälterwand abgestützt und mit einer Luftleitung 37 versehen, die oberhalb des Flüssigkeitsspiegels 4 endet und somit mit der Atmosphäre in Verbindung steht.

Unterhalb der Belüftungseinrichtung 6 mündet in das Innere des Behälters 2 mindestens eine von einem angeflanschten Rohr gebildete Ansaugleitung 8, dessen Ansaugöffnung 9 sich in einem Abstand von etwa 5 bis 6 m - je nach Beckengröße - von der Behälterwand befindet.

Zweckmäßig sind die Behälter 2 am Beckenrand vorgesehen und es erstrecken sich die Ansaugleitungen in Richtung zur Beckenmitte, also bei einem zylindrischen Becken radial nach innen. Die Anordnung der Behälter 2 am Beckenrand ergibt den Vorteil, daß sie zu Wartungszwecken leicht zugänglich sind.

Mittels der Belüftungseinrichtung 6 wird die über die Luftleitung 37 angesaugte Luft mit der über die Ansaugleitung B in das Innere des Behälters 2 gelangenden Flüssigkeit vermischt, diese Flüssigkeit somit belüftet. Durch diese Vermischung mit Luft wird die Flüssigkeit leichter und steigt somit im Behälter 2 nach oben, bis sie über die Überströmöffnung 5 aus dem Behälter austritt. Durch diese Strömung der Flüssigkeit im Behälter 2 nach oben wird jedoch Flüssigkeit über die Ansaugleitung 8 in den Behälter 2 angesaugt, wodurch sich im Becken 1 eine Flüssigkeitsströmung in Richtung zur Ansaugöffnung 9 ausbildet. Da diese Ansaugöffnung 9 einen beträchtlichen Abstand vom Behälter 2 aufweist, bildet sich die Strömung im Becken 1 nicht nur in unmittelbarer Nachbarschaft der Behälter 2 aus, sondern erstreckt sich über einen großen Bereich des Beckenvolumens. Es erfolgt somit bei stationär angeordneter Belüftungseinrichtung 6 eine weiträumige Belüftung und Durchmischung des Beckeninhaltes.

Insbesondere dann, wenn sich im Becken 1 Rohwasser befindet, welches belüftet werden soll, bildet sich an der Oberfläche in störender Weise Schaum, der beseitigt werden muß. Zu diesem Zweck kann im Bereich des Flüssigkeitsspiegels 4 des Beckens 1 eine Einrichtung 10 zum Zerstören des sich an der Oberfläche der Flüssigkeit bildenden Schaumes vorgesehen sein, deren Aufbau im folgenden noch näher erläutert wird.

Die in den Fig.3 und 4 dargestellte Belüftungseinrichtung 6 weist ein Gehäuse 33 auf, in dem ein Tauchmotor angeordnet ist, dessen Welle mit 34 bezeichnet ist. Von der Welle 34 wird ein scheibenförmiges Laufrad 35 angetrieben. Im unteren Teil des Gehäuses 33 befindet sich ein Luftkanal 36, der über die Luftleitung 37 mit der Atmosphäre verbunden ist. Diese Luftleitung 37 endet somit oberhalb des Flüssigkeitsspiegels des Beckens 1. An der Unterseite des Luftkanales 36 befindet sich eine ringförmige Öffnung 38, die von der Oberseite 39 des Laufrades 35 derart abgedeckt wird, daß zwischen dem Rand dieser ringförmigen Öffnung 38 und der Oberseite 39 ein Spalt 40 freigehalten wird.

An der Unterseite 41 des Laufrades 35 sind bogenförmig ausgebildete, etwa radial verlaufende, Rippen 42 vorgesehen. Unterhalb des Laufrades 35 befindet sich ein Abdeckring 43 in einem solchen Abstand von der Unterseite 41, daß zwischen dieser Unterseite und dem Abdeckring 43 gleichfalls ein Spalt 44 freigehalten ist.

Der Außendurchmesser des Abdeckringes 43 ist größer und der Innendurchmesser des Abdeckringes 43 kleiner als der Durchmesser des Laufrades 35. Die Anzahl der Rippen 42 ist abhängig von der Tiefe, in welcher sich die Belüftungseinrichtung im Behälter 2 befindet. In der Regel sind zwischen 8 und 20 solcher Rippen 42 vorgesehen, wobei die Anzahl der Rippen mit zunehmender Tiefe abnimmt.

Die erfindungsgemäße Belüftungseinrichtung 6 arbeitet wie folgt:

Bei der Rotation des Laufrades 35 wird einerseits durch die an der Unterseite 41 vorgesehenen Rippen 42 die im Behälter 2 befindliche Flüssigkeit zentrisch angesaugt und in Richtung zum Umfang des Laufrades gefördert, andererseits erfolgt ein Ansaugen von Luft über die Luftleitung 37, welche aus dem Spalt 40 austritt und sich dort mit der aus dem Spalt 44 herausgeschleuderten Flüssigkeit innig vermischt, so daß eine hervorragende Belüftung dieser Flüssigkeit bei gleichzeitiger Umwälzung erzielt wird. Die beiden Spalte 40,44 gewährleisten eine gute Saugwirkung sowohl für die Flüssigkeit als auch für die Luft.

Die in den Fig.5 und 6 dargestellte Einrichtung 10 zur Zerstörung des sich auf der Oberfläche der im Becken 1 befindlichen Flüssigkeit bildenden Schaumes weist ein Gehäuse 45 auf, in dem gleichfalls ein Tauchmotor untergebracht ist, dessen Welle 46 ebenfalls ein scheibenförmiges Laufrad 47 antreibt, welches sich bei dieser Einrichtung oberhalb des Tauchmotors, etwa horizontal im Bereich der Grenze zwischen der flüssigen und der schaumförmigen Phase des Substrates befindet. Die Rippen 48 sind auf der Oberseite 49 des Laufrades vorgesehen und verlaufen gleichfalls bogenförmig radial nach außen. Die Anzahl der Rippen 48 bei dieser Einrichtung ist jedoch geringer als die Anzahl der Rippen 42 der Belüftungseinrichtung 6 und beträgt vorzugsweise weniger als die Hälfte.

Auf der Oberseite 49 des Laufrades 47, das bei dieser Einrichtung zur Zerstörung des Schaumes durch keinen Abdeckring abgedeckt ist, wird der sich auf der Oberfläche der im Becken 1 befindlichen Flüssigkeit bildende Schaum wirksam dadurch zerstört, daß der Schaum im Zentrum des Laufrades 47 angesaugt und in Richtung zum Umfang des Laufrades gefördert wird, wo er verflüssigt wird.

## Patentansprüche

1. Vorrichtung zur Aufbereitung von in Becken (1) befindlichen Gewässern, insbesondere von Abwässern, Deponiesäften, Fischgewässern, mit wenigstens einem im Becken (1) versenkt angeordneten Schacht, dessen oberes Ende wenigstens eine Überströmöffnung (5) aufweist und dessen unteres Ende über einen Zuströmquerschnitt mit dem Becken (1) verbunden ist, und in dem eine Belüftungseinrichtung (6) angeordnet ist, dadurch gekennzeichnet, daß der Schacht von einem am unteren Ende (3) geschlossenen, vorzugsweise zylindrisch mit im wesentlichen lotrechter Achse ausgebildeten, Behälter (2) gebildet ist, in dem unterhalb der Belüftungseinrichtung (6) mindestens eine den Zuströmquerschnitt bildende Ansaugleitung (8) mündet, dessen Ansaugöffnung (9) in Abstand von der Behälterwand und in Abstand vom Boden des Beckens (1) unterhalb des Flüssigkeitspiegels (4) desselben angeordnet ist.

2. Vorrichtung nach Anspruch 1, dadurch gekennzeichnet, daß die am oberen Ende des Behälters (2) angeordnete Überströmöffnung (5) unterhalb des Flüssigkeitsspiegels (4) des Beckens (1) vorgesehen ist.

3. Vorrichtung nach Anspruch 1 und 2, dadurch gekennzeichnet, daß in Abstand oberhalb der vorzugsweise vom oben offenen Ende des Behälters (2) gebildeten Überströmöffnung, jedoch unterhalb des Flüssigkeitsspiegels (4), eine Abdeckplatte (11) vorgesehen ist.

4. Vorrichtung nach Anspruch 1,2 oder 3, dadurch gekennzeichnet, daß die Ansaugöffnung (9) der Ansaugleitung (8) im Bereich des Bodens des Beckens (1) vorgesehen ist.

5. Vorrichtung nach einem der Ansprüche 1 bis 4, dadurch gekennzeichnet, daß die Belüftungseinrichtung (6) ein von einem Tauchmotor zu einer Rotationsbewegung angetriebenes, etwa horizontal unterhalb des Motors angeordnetes scheibenförmiges Laufrad (35) aufweist, dessen Oberseite (39) eine ringförmige Öffnung (38) eines Luftkanales (36) abdeckt, der über eine Luftleitung (37) mit der Atmosphäre in Verbindung steht, und dessen Unterseite (41) mit etwa radial verlaufenden Rippen (42) versehen ist und am Umfang durch einen Abdeckring (43) abgedeckt ist, wobei zwischen dem Rand der ringförmigen Öffnung (38) des Luftkanales (36) und der Oberseite (39) des Laufrades (35) sowie zwischen dem Abdeckring (43) und der Unterseite (41) des Laufrades (35) ein Spalt (40,41) freigehalten ist.

6. Vorrichtung nach Anspruch 5, dadurch gekennzeichnet, daß der Außendurchmesser des Abdeckringes (43) größer und der Innendurchmesser des Abdeckringes (43) kleiner als der Durchmesser des Laufrades (35) sind.

7. Vorrichtung nach Anspruch 5, dadurch gekennzeichnet, daß die Rippen (42) an der Unterseite (41) des Laufrades (35) bogenförmig verlaufen.

8. Vorrichtung nach Anspruch 5,6 oder 7, dadurch gekennzeichnet, daß zumindest 8, vorzugsweise zwischen 8 und 20, Rippen (42) vorgesehen sind.

9. Vorrichtung nach einem der Ansprüche 1 bis 4, dadurch gekennzeichnet, daß die Belüftungseinrichtung (6) von einer mit einer Druckluftquelle in Verbindung stehenden Lufteinblasdüse gebildet ist.

10. Vorrichtung nach einem der Ansprüche 1 bis 9, dadurch gekennzeichnet, daß der Behälter (2), vorzugsweise mehrere Behälter, am Rand des Beckens (1) angeordnet ist bzw. sind, und daß die Ansaugleitungen (8) für die im Becken (1) befindliche Flüssigkeit etwa in Richtung zum Mittelpunkt des Beckens (1) verlaufen.

11. Vorrichtung nach einem der Ansprüche 1 bis 10, dadurch gekennzeichnet, daß im Bereich des Flüssigkeitsspiegels (4) des Beckens (1) eine Einrichtung (10) zum Zerstören des sich an der Oberfläche der Flüssigkeit bildenden Schaumes vorgesehen ist.

12. Vorrichtung nach Anspruch 11, dadurch gekennzeichnet, daß die Einrichtung (10) zur Zerstörung des sich auf der Oberfläche der Flüssigkeit bildenden Schaumes (10) ein von einem Tauchmotor zu einer Rotationsbewegung angetriebenes, etwa horizontal im Bereich der Grenze zwischen der flüssigen und der schaumförmigen Phase des Substrates oberhalb des Motors angeordnetes scheibenförmiges Laufrad (47) aufweist, dessen Oberseite (49) mit etwa radial verlaufenden Rippen (48) versehen ist.

13. Vorrichtung nach Anspruch 12, dadurch gekennzeichnet, daß die Rippen (48) an der Oberseite (49) des Laufrades (47) bogenförmig verlaufen.

## Claims

1. Device for treating waters in reservoirs (1), particularly of waste waters, garbage, dump liquids, fish waters, comprising at least one well immersely disposed in the reservoir (1), the upper end of the well having at least one overflow opening (5) and the lower end thereof being in connection with the reservoir (1) via a supply cross section, and a ventilation means (6) being disposed in the well, characterized in that the well is formed by a tank (2) closed at its lower end (3) and preferably being of cylindrical shape having a substantially vertical axis, at least one suction line (8) forming the supply cross section ending in the tank below the ventilation means (6), the suction opening (9) of which line being disposed spaced apart from the tank wall and spaced apart from the bottom of the reservoir (1) below the liquid level (4) thereof.

2. Device according to claim 1, characterized in that the overflow opening (5) disposed at the upper end of the tank (2) is provided below the liquid level (4) of the reservoir (1).

3. Device according to claims 1 and 2, characterized in that a cover plate (11) is provided spaced apart above the overflow opening that preferably is formed by the upper open end of the tank (2), however below the liquid level (4).

4. Device according to claim 1, 2 or 3, characterized in that the suction opening (9) of the suction line (8) is disposed in the region of the bottom of the reservoir (1).

5. Device according to any of claims 1 to 4, characterized in that the ventilation means (6) comprises a disk-shaped rotor (35) driven for rotation by a submersible motor and disposed about horizontally below the motor, the upper surface (39) of the rotor covering an annular opening (38) of an air channel (36) that is in connection with the atmosphere via an air line (37) and the lower surface (31) thereof being provided with substantially radially extending ribs (42) and being covered at the periphery by a cover ring (43), a free gap (40,41) being provided between the edge of the annular opening (38) of the air channel (36) and the upper surface (39) of the rotor (35) as well as between the cover ring (43) and the bottom surface (41) of the rotor (35).

6. Device according to claim 5, characterized in that the outer diameter of the cover ring (43) is greater and the inner diameter of the cover ring (43) is smaller than the diameter of the rotor (35).

7. Device according to claim 5, characterized in that the ribs (42) extend arched at the bottom surface (41) of the rotor (35).

8. Device according to claim 5, 6 or 7, characterized in that at least 8, preferably between 8 and 20, ribs (42) are provided.

9. Device according to any of claims 1 to 4, characterized in that the ventilation means (6) is formed by an air blowing nozzle being in connection with a source of pressurized air.

10. Device according to any of claims 1 to 9, characterized in that the container (2), preferably a plurality of containers, is or are disposed at the edge of the reservoir (1), and that the suction lines (8) for the liquid provided within the reservoir (1) extend substantially in direction towards the center of the reservoir (1).

11. Device according to any claims 1 to 10, characterized in that a means (10) for destroying the froth constituted on the surface of the liquid is provided in the region of the liquid level (4) of the reservoir (1).

12. Device according to claim 11, characterized in that the means (10) for destroying the froth (10) constituted on the surface of the liquid comprises a disk-shaped rotor (47) driven for rotation by an immersible motor and disposed substantially horizontally in the region of the boundary between the liquid and the froth-shaped phase of the substrate above the motor, the upper surface (49) of the rotor being provided with substantially radially extending ribs (48).

13. Device according to claim 12, characterized in that the ribs (48) extend arched on the upper surface (49) of the rotor (47).

## Revendications

1. Dispositif de traitement d'eaux dans des bassins, en particulier d'eaux usées, d'eaux de suintement de décharges, d'eaux pour poissons, avec au moins un puits, noyé dans le bassin (1), dont l'extrémité supérieure présente au moins une ouverture de déversement (5), et dont l'extrémité inférieure est reliée au bassin (1) par l'intermédiaire d'une section transversale d'écoulement d'alimentation, et dans lequel est disposé un dispositif d'aération (6), caractérisé en ce que le puits est formé par un récipient (2), fermé à l'extrémité inférieure (3), de préférence cylindrique avec un axe sensiblement vertical, dans lequel débouche au-dessous du dispositif d'aération (6) au moins une conduite d'aspiration (8) formant la section transversale d'écoulement d'alimentation, dont l'ouverture d'aspiration (9) est disposée à distance de la paroi du récipient et à distance du fond du bassin (1), au-dessous de son niveau de liquide (4).

2. Dispositif selon la revendication 1, caractérisé en ce que l'ouverture de déversement (5) disposée à l'extrémité supérieure du récipient (2) est prévue au-dessous du niveau de liquide (4) du bassin (1).

3. Dispositif selon les revendications 1 ou 2, caractérisé en ce qu'une plaque de recouvrement (11) est prévue, à distance au-dessus de l'ouverture de déversement, formée de préférence par l'extrémité, ouverte en partie supérieure, du récipient (2), cependant au-dessous du niveau de liquide (4).

4. Dispositif selon la revendication 1, 2 ou 3, caractérisé en ce que l'ouverture d'aspiration (9) de la conduite d'aspiration (8) est prévue dans la zone du fond du bassin (1).

5. Dispositif selon l'une des revendications 1 à 4, caractérisé en ce que le dispositif d'aération (6) présente une roue mobile (35) discoïde, entraînée par un moteur immergé pour lui donner un mouvement rotatif, disposée horizontalement au-dessous du moteur, dont la face supérieure (39) recouvre une ouverture annulaire (38) d'un canal d'air (36), relié à l'atmosphère par l'intermédiaire d'une conduite d'air (37), et dont la face inférieure (41) est pourvue de nervures (42) s'étendant à peu près radialement, et est recouverte en périphérie par une bague de recouvrement (43), un interstice (40, 41) étant conservé entre le bord de l'ouverture annulaire (38) du canal d'air (36) et la face supérieure (39) de la roue mobile (35), ainsi qu'entre la bague de recouvrement (43) et la face inférieure (41) de la roue mobile (35).

6. Dispositif selon la revendication 5, caractérisé en ce que le diamètre extérieur de la bague de recouvrement (43) est supérieur au diamètre de la roue mobile (35) et le diamètre intérieur de la bague de recouvrement (43) est inférieur au diamètre de la roue mobile (35).

7. Dispositif selon la revendication 5, caractérisé en ce que les nervures (42) s'étendant en face inférieure (41) de la roue mobile (35) ont une forme arquée.

8. Dispositif selon l'une des revendications 5, 6 ou 7, caractérisé en ce que sont prévues au moins 8, de préférence entre 8 et 20 nervures (42).

9. Dispositif selon l'une des revendications 1 à 4, caractérisé en ce que le dispositif d'aération (6) est formé par une buse d'insufflation d'air, relié à une source d'air comprimé.

10. Dispositif selon l'une des revendications 1 à 9, caractérisé en ce que le récipient (2), de préférence plusieurs récipients, est/sont prévu(s) sur le bord du bassin (1), et en ce que les conduites d'aspiration (8) destinées au liquide se trouvant dans le bassin (1) s'étendent à peu près en direction du centre du bassin (1).

11. Dispositif selon l'une des revendications 1 à 10, caractérisé en ce qu'un dispositif (10) destiné à détruire la mousse se formant à la surface du liquide est prévu dans la zone du niveau de liquide (4) du bassin (1).

12. Dispositif selon la revendication 11, caractérisé en ce que le dispositif (10) de destruction de la mousse (10) se formant à la surface du liquide présente une roue mobile (47) discoïde, entraînée par un moteur immergé pour lui donner un mouvement rotatif, disposée horizontalement dans la zone entre la limite entre le liquide et la phase mousseuse du substrat, au-dessus du moteur, roue mobile dont la face supérieure (49) est pourvue de nervures (48) s'étendant à peu près radialement.

13. Dispositif selon la revendication 12, caractérisé en ce que les nervures (48) s'étendant en face supérieure (49) de la roue mobile (47) ont une forme arquée.
